# FASCICULE DE BREVET EUROPEEN

(11) **EP 0 671 703 B1**
(45) Date de publication et mention de la délivrance du brevet: **03.05.2000**
(21) Numéro de dépôt: 95400233.3
(22) Date de dépôt: 03.02.1995
(51) Int. Cl.: G06K 19/073, G07F 7/10

(54) **Procédé de protection des composants de cartes à mémoire contre des utilisations frauduleuses**
Verfahren zum Schutz von Speicherkarte-Komponenten gegen betrügerischen Gebrauch
Method for protecting components of memory cards against fraudulent use

(30) Priorité: 11.02.1994 FR 9401584
(43) Date de publication de la demande: 13.09.1995
(73) Titulaire: SCHLUMBERGER Systèmes, 92120 Montrouge (FR)
(72) Inventeur: Thiriet, Fabien, F-45100 Orleans (FR)
(74) Mandataire: Bugnon-Hays, Claudine

(56) Documents cités:
- EP-A- 0 028 965
- EP-A- 0 216 298
- FR-A- 2 503 423
- GB-A- 2 206 431

## Description

La présente invention concerne un procédé de protection des composants de cartes à mémoire contre des utilisations frauduleuses, dans lequel le composant est bloqué aussi longtemps qu'un ordre de déblocage constitué par une clé secrète ne lui a pas été appliqué.

A l'heure actuelle, pour réaliser une carte à mémoire selon le processus traditionnel, on passe obligatoirement par les différentes étapes suivantes :
I. Fabrication du composant, ou "puce", chez le fondeur de silicium.
   1. Masquage de la mémoire morte ROM (système opératoire) et des différentes fonctionnalités du composant, diffusion, test, etc... ;
   2. Inscription d'un numéro unique N (différent pour chaque composant) et d'une clé secrète CS dans la mémoire non volatile programmable du composant (EPROM, EEPROM, FLASH, ...) ;
   3. Composant sous contrôle du système opératoire ;
   4. Livraison des tranches de silicium sur lesquelles sont réalisés les composants à l'encarteur.
II. Encartage du composant chez l'encarteur.
   1. Réception des tranches de silicium ;
   2. Encartage dans une carte plastique ;
   3. Déblocage du composant au moyen de la clé secrète CS ;
   4. Personnalisation de la mémoire non volatile programmable de la carte en fonction des applications envisagées ;
   5. Livraison au client du produit fini.

On voit qu'après l'étape I.1., le composant est sous le contrôle du système opératoire (ROM) qui bloque toute commande reçue, tant que l'ordre de déblocage constitué par la clé secrète CS n'a pas correctement fonctionné. Cette commande de déblocage n'est en fait envoyée à la carte que lors de l'étape II.3., chez l'encarteur.

Cependant, on voit également que le fondeur de silicium inscrit la clé secrète CS dans le composant lors de l'étape I.2. et connaît donc forcément cette clé qui lui est généralement communiquée sous forme sécurisée par l'encarteur. Par suite, du personnel indélicat du fondeur pourrait fort bien débloquer le composant dès l'étape I.2. et l'utiliser à des fins frauduleuses.

La présente invention a donc pour but principal de remédier à cet inconvénient et, pour ce faire, elle a pour objet un procédé de protection des composants de cartes à mémoire du type susmentionné qui se caractérise essentiellement en ce qu'il consiste à inscrire dans le composant, lors de sa fabrication, une valeur et un résultat, ledit résultat étant relié à ladite valeur par un algorithme déterminé et ladite clé secrète.

Grâce à cette disposition, le fondeur de silicium ne détient plus aucun secret mais seulement ladite valeur et ledit résultat inscrits dans le composant, ces données pouvant être conservées non secrètes. Ainsi, seul l'encarteur détient la clé secrète permettant de débloquer le composant.

Dans une forme de réalisation particulière de l'invention, ladite valeur est inscrite dans la mémoire morte ROM du composant, tandis que ledit résultat est inscrit dans la mémoire programmable de ce composant.

Il est ainsi possible de changer périodiquement le résultat tout en conservant la même valeur, donc de changer également la clé secrète, ce qui réduit encore les possibilités de fraude. En effet, à chaque clé secrète correspond un nouveau résultat calculé par l'encarteur en fonction de l'algorithme choisi.

Selon une autre caractéristique de l'invention, la clé secrète est stockée sur une autre carte à mémoire, mais sous une forme diversifiée par un numéro propre au composant préalablement inscrit dans celui-ci.

Ainsi, la clé secrète ne peut pas sortir en clair de cette carte, ce qui permet d'utiliser des encarteurs sous-traitants sans avoir à leur divulguer ladite clé secrète.

Une forme d'exécution de l'invention est décrite ci-après plus en détail à titre d'exemple.

Le procédé conforme à l'invention consiste essentiellement à inscrire dans le composant, lors de sa fabrication et à la place de la clé secrète CS permettant de débloquer ledit composant, une valeur V et un résultat R, ce résultat R dépendant à la fois de ladite valeur V et de la clé secrète CS par l'intermédiaire d'un algorithme déterminé A.

Ainsi, pour réaliser une carte à mémoire selon le procédé de l'invention, on passe par les différentes étapes suivantes :
I. Fabrication du composant chez le fondeur de silicium.
   1. Masquage de la mémoire morte ROM (système opératoire) et des différentes fonctionnalités du composant. A ce stade, on inscrit également dans la ROM une valeur V.
   2. Inscription d'un numéro unique N propre au composant considéré dans la mémoire non volatile programmable du composant, par exemple une EPROM. A ce stade, on inscrit également dans la mémoire programmable EPROM un résultat R fourni par l'encarteur.
   3. Composant sous contrôle du système opératoire.
   4. Livraison des tranches de silicium à l'encarteur.
II. Encartage du composant chez l'encarteur.
   1. Réception des tranches de silicium.
   2. Encartage dans une carte plastique.
   3. Déblocage du composant au moyen de la clé secrète CS connue du seul encarteur.
   4. Personnalisation de la mémoire non volatile programmable de la carte.
   5. Livraison au client du produit fini.

Après l'étape I.1., le composant est sous le contrôle du système opératoire de la ROM qui bloque toute commande reçue, tant que l'ordre de déblocage constitué par la clé secrète CS n'a pas correctement fonctionné. Conformément à l'invention, cette clé secrète CS est liée à la valeur V et au résultat R par un algorithme A.

Le déblocage de la carte s'effectue donc en comparant le résultat R inscrit dans le composant au résultat calculé à partir de la valeur V, également inscrite dans le composant, de la clé secrète CS, appliqué par l'encarteur et connue de lui seul, et de l'algorithme A, selon la formule R = A (V.CS). Si les deux résultats sont identiques, la carte est débloquée, tandis que dans le cas contraire, la carte reste bloquée.

Bien entendu, l'algorithme A devra être conçu de telle façon que connaissant V et R, il soit impossible d'en déduire la clé secrète CS. En effet, la valeur V se trouve en ROM et elle est donc non secrète puisque le fondeur pourrait de toute façon la connaître pour masquer la ROM. De même, le résultat R est également non secret et doit être fourni par l'encarteur au fondeur. En revanche, la clé CS n'est détenue que par l'encarteur qui est seul habilité à débloquer la carte, ce qui réduit considérablement les risques de fraude.

On notera en outre que comme le résultat R se trouve dans une mémoire non volatile réinscriptible, il est possible de changer périodiquement ce résultat sans modifier la valeur V, et donc de changer également la clé secrète CS, ce qui réduit encore les possibilités de fraude. Il suffit en effet que l'encarteur change la clé CS pour générer un nouveau résultat R selon la formule R = A (V.CS).

On peut également envisager de stocker la clé secrète CS dans une autre carte à mémoire, dite carte lot, cette clé ne sortant jamais en clair de la carte lot, mais seulement diversifiée par le numéro N du composant selon la formule suivante CS = A (N, CSM), dans laquelle CSM est la clé maître secrète stockée dans la carte lot, puis diversifiée à l'intérieur de la carte lot au moyen de l'algorithme A et du numéro N.

Grâce à cette disposition, il est possible de multiplier le nombre d'encarteurs sans augmenter les risques de fraude. En effet, l'encarteur ayant développé le système opératoire génère des cartes lots, puis les envoie aux différents encarteurs sous-traitants sans leur dévoiler la clé secrète CS, puisque celle-ci ne sort jamais en clair de la carte lot, mais seulement sous forme diversifiée.

## Revendications

1. Procédé de protection des composants de cartes à mémoire contre des utilisations frauduleuses, dans lequel le composant est bloqué aussi longtemps qu'un ordre de déblocage constitué par une clé secrète CS ne lui a pas été appliqué, caractérisé en ce qu'il consiste à inscrire dans le composant, lors de sa fabrication, une valeur V et un résultat R, ledit résultat R étant relié à ladite valeur V par un algorithme déterminé A et ladite clé secrète CS.

2. Procédé selon la revendication 1, caractérisé en ce que ladite valeur V est inscrite dans la mémoire morte ROM du composant, tandis que ledit résultat R est inscrit dans la mémoire programmable de ce composant.

3. Procédé selon la revendication 1 ou 2, caractérisé en ce que la clé secrète CS est stockée sur une autre carte à mémoire, mais sous une forme diversifiée par un numéro (N) propre au composant préalablement inscrit dans celui-ci.

## Patentansprüche

1. Verfahren zum Schutz der Bauelemente von Speicherkarten gegen betrügerische Benutzungen, bei dem das Bauelement so lange gesperrt ist, bis ihm ein von einem geheimen Schlüssel CS gebildeter Entsperrbefehl zugeführt wird, **dadurch gekennzeichnet,** daß es darin besteht, während der Herstellung des Bauelementes einen Wert V und ein Ergebnis R in das Bauelement zu schreiben, wobei das Ergebnis R mit dem Wert V durch einen bestimmten Algorithmus A und den geheimen Schlüssel CS verknüpft ist.

2. Verfahren nach Anspruch 1, **dadurch gekennzeichnet,** daß der Wert V in den Festwertspeicher ROM des Bauelementes eingeschrieben wird, während das Ergebnis R in den programmierbaren Speicher des Bauelementes eingeschrieben wird.

3. Verfahren nach Anspruch 1 oder 2, **dadurch gekennzeichnet,** daß der geheime Schlüssel CS auf einer anderen Speicherkarte gespeichert wird, jedoch in einer Form, die durch eine Zahl N abgeändert wurde, die zu dem Bauelement gehört, in das sie vorher eingeschrieben wurde.

## Claims

1. A method of protecting memory card components from fraudulent uses, in which the component remains locked until an unlocking order constituted by a secret key CS is applied thereto, the method being characterized in that it consists in writing both a value V and a result R in the component, said result R being associated with said value V by a determined algorithm A and said secret key CS.

2. A method according to claim 1, characterized in that said value V is written in the ROM of the component, while result R is written in the programmable memory of the component.

3. A method according to claim 1 or 2, characterized in that the secret key CS is stored on another memory card, but in a form that is diversified by a number N specific to the component and previously written therein.
